# EUROPEAN PATENT APPLICATION

(11) **EP 4 801 043 A1**
(43) Date of publication of application: **02.09.2026**
(21) Application number: 23957751.3
(22) Date of filing: 30.10.2023
(51) Int. Cl.: H04N 21/436, H04N 21/4363, H04N 21/475, H04N 21/482

(54) **DISPLAY SYSTEM, DISPLAY DEVICE, AND OPERATION METHOD THEREOF**

(71) Applicant: LG Electronics Inc., Yeongdeungpo-gu Seoul 07336 (KR)
(72) Inventor: KIM, Taewook, Seoul 06772 (KR); YOON, Heebum, Seoul 06772 (KR)
(74) Representative: Vossius & Partner Patentanwälte Rechtsanwälte mbB
(86) International application number: PCT/KR2023/017023
(87) International publication number: WO 2025/095154

(57) **Abstract**

A display device and an operational method thereof are disclosed. According to at least one of various embodiments of the present disclosure, the display device may include a memory and a processor configured to search for neighboring source devices, store a sink device list and a source device list, transmit a second signal to a network when a first signal is received from a first source device among the searched source devices, and register the first source device in a first list when a third signal is received from the first source device and the first source device is included in the stored source device list.

## Description

### Technical Field

The present disclosure relates to a display system, a display device, and an operational method thereof.

### Background Art

Recently, functions of terminals are diversified, for example, data and voice communication, photographing and video capturing through a camera, voice recording, reproduction of music files through a speaker system, and a function of outputting an image or a video on a display are provided.

Some terminals have an electronic game play function added or perform a multimedia player function.

As such, as functions of terminals are diversified, for example, the terminals are implemented in the form of a multimedia device (Multimedia player) having complex functions such as photographing of a picture or a video, reproduction of a music or video file, a game, and reception of a broadcast.

### Summary of the Invention

### Technical Problem

The present disclosure is to provide a display system, a display device, and an operational method thereof, which are connected with only one source device among a plurality of source devices belonging to the same network without adding a separate hardware device, and exclude connection of the remaining source device(s).

### Technical Solution

A display device according to at least one of various embodiments of the present disclosure may include a memory; and a processor configured to search for neighboring source devices, store a sink device list and a source device list, transmit a second signal to a network when a first signal is received from a first source device among the searched source devices, and register the first source device in a first list when a third signal is received from the first source device and the first source device is included in the stored source device list.

An operational method of a display device according to at least one of various embodiments of the present disclosure may include searching for neighboring source devices; storing a sink device list and a source device list; receiving a first signal from a first source device among the searched source devices; transmitting a second signal to a network; receiving a third signal from the first source device; and registering the first source device in a list when the first source device is included in the stored source device list.

A display system according to at least one of various embodiments of the present disclosure may include a plurality of source devices; and
a sink device including a processor configured to search for neighboring source devices, store a sink device list and a source device list, transmit a second signal to a network when a first signal is received from a first source device among the searched source devices, and register the first source device in a first list when a third signal is received from the first source device and the first source device is included in the stored source device list.

### Advantageous Effects

According to at least one of various embodiments of the present disclosure, the following advantages can be obtained.

First, there is an advantage that a desired source device and a sink device can be connected to each other without adding a separate hardware device such as a server.

Second, since a separate server is not passed through, there is an advantage that a network load due to traffic can be reduced.

Third, since a separate server is not passed through, there is an advantage that security issues such as personal information can be minimized.

Fourth, there is an advantage that convenience of use can be improved since a connection with a sink device can be easily made without requiring a separate authentication procedure by a user.

### Description of Drawings

FIG. 1 is a block diagram illustrating a configuration of a display device according to an embodiment of the present disclosure.
FIG. 2 is a block diagram of a configuration of a remote control apparatus according to an embodiment of the present disclosure.
FIG. 3 illustrates an example of an actual configuration of a remote control apparatus according to an embodiment of the present disclosure.
FIG. 4 illustrates an example of using a remote control apparatus according to an embodiment of the present disclosure.
FIG. 5 is a view for describing a landscape mode and a portrait mode of a stand-type display device according to an embodiment of the present disclosure.
FIG. 6 is a view illustrated to describe a display system according to an embodiment of the present disclosure.
FIG. 7 is a view illustrated to describe a configuration for a connection operation between a source device and a sink device according to embodiments of the present disclosure.
FIG. 8 describes a connection operation between a sink device and a source device according to an embodiment of the present disclosure.
FIG. 9 is a view illustrating an example of a user interface provided by a sink device according to an embodiment of the present disclosure.

### Best Mode

Hereinafter, embodiments related to the present disclosure will be described in more detail with reference to the drawings. In the following description, suffixes "module" and "unit" for components used in the specification are given or mixed only in consideration of ease of description of the specification, and do not have meanings or roles distinguished from each other by themselves.

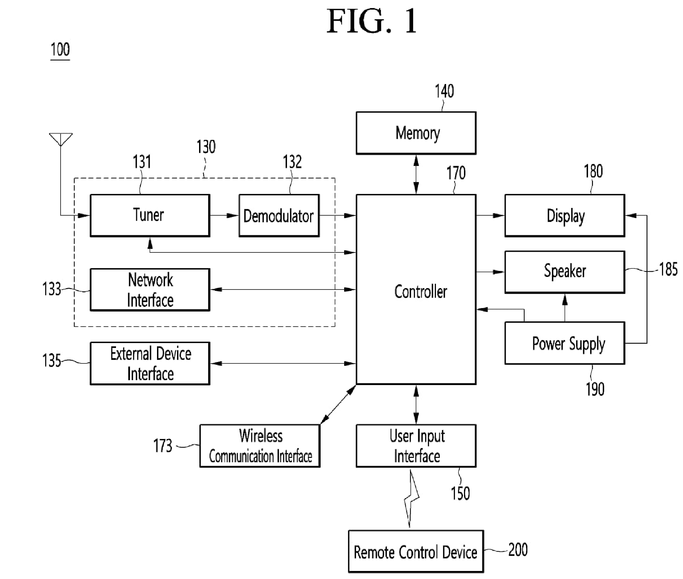

FIG. 1 is a block diagram illustrating a configuration of a display device 100 according to an embodiment of the present disclosure.

Referring to FIG. 1, the display device 100 may include a broadcast receiver 130, an external device interface 135, a memory 140, a user input interface 150, a processor 170, a wireless communicator 173, a voice obtainer 175, a display 180, an audio outputter 185, and a power supply 190.

The broadcast receiver 130 may include a tuner 131, a demodulator 132, and a network interface 133.

The tuner 131 may tune to a specific broadcast channel according to a channel tuning command. The tuner 131 may receive a broadcast signal for the tuned specific broadcast channel.

The demodulator 132 may separate the received broadcast signal into a video signal, an audio signal, and a data signal related to a broadcast program, and may restore the separated video signal, audio signal, and data signal into a form capable of being output.

The network interface 133 may provide an interface for connecting the display device 100 to a wired/wireless network including an Internet network. The network interface 133 may transmit or receive data to or from another user or another electronic device through a connected network or another network linked to the connected network.

The network interface 133 may access a predetermined web page through the connected network or another network linked to the connected network. That is, the network interface 133 may access a predetermined web page through the network and transmit or receive data with a corresponding server.

Further, the network interface 133 may receive content or data provided by a content provider or a network operator. That is, the network interface 133 may receive content such as a movie, an advertisement, a game, Video on Demand (VOD), and a broadcast signal provided from a content provider or a network provider through the network, and information related thereto.

Further, the network interface 133 may receive update information and update files of firmware provided by a network operator, and may transmit data to the Internet or to a content provider or a network operator.

The network interface 133 may select and receive a desired application among applications publicly opened through the network.

The external device interface 135 may receive an application or an application list in a neighboring external device and may transmit the same to the processor 170 or the memory 140.

The external device interface 135 may provide a connection path between the display device 100 and an external device. The external device interface 135 may receive at least one of video or audio output from an external device connected to the display device 100 wirelessly or by wire and may transmit the same to the processor 170. The external device interface 135 may include a plurality of external input terminals. The plurality of external input terminals may include an RGB terminal, one or more High-Definition Multimedia Interface (HDMI) terminals, and a component terminal.

An audio signal of an external device input through the external device interface 135 may be output through the display 180. An audio signal of an external device input through the external device interface 135 may be output through the audio outputter 185.

An external device connectable to the external device interface 135 may be any one of a set-top box, a Blu-ray player, a DVD player, a game console, a sound bar, a smartphone, a PC, a USB memory, and a home theater, but this is only an example.

Further, some content data stored in the display device 100 may be transmitted to a selected user or a selected electronic device among other users or other electronic devices previously registered in the display device 100.

The memory 140 may store programs for signal processing and control of each signal in the processor 170, and may store processed video, audio, or data signals.

Further, the memory 140 may perform a function for temporarily storing video, audio, or data signals input from the external device interface 135 or the network interface 133, and may store information on a predetermined image through a channel memory function.

The memory 140 may store an application or an application list input from the external device interface 135 or the network interface 133.

The display device 100 may reproduce a content file (a moving image file, a still image file, a music file, a document file, an application file, etc.) stored in the memory 140 to provide the same to a user.

The user input interface 150 may transmit a signal input by a user to the processor 170 or may transmit a signal from the processor 170 to the user. For example, the user input interface 150 may receive and process control signals such as power on/off, channel selection, and screen setting from a remote control device 200 according to various communication methods such as Bluetooth, Ultra Wideband (UWB), ZigBee, Radio Frequency (RF), or infrared (IR), or may process to transmit control signals from the processor 170 to the remote control device 200.

Further, the user input interface 150 may transmit a control signal input from local keys (not shown) such as a power key, a channel key, a volume key, and a setting value to the processor 170.

A video signal processed by the processor 170 may be input to the display 180 and may be displayed as an image corresponding to the video signal. Further, the video signal processed by the processor 170 may be input to an external output device through the external device interface 135.

An audio signal processed by the processor 170 may be audio-output through the audio outputter 185. Further, the audio signal processed by the processor 170 may be input to an external output device through the external device interface 135.

In addition, the processor 170 may control an overall operation within the display device 100.

Further, the processor 170 may control the display device 100 by a user command input through the user input interface 150 or by an internal program, and may allow a user to download a desired application or an application list into the display device 100 by accessing a network.

The processor 170 may allow channel information selected by a user to be output together with a processed video or audio signal through the display 180 or the audio outputter 185.

Further, according to an external device video reproduction command received through the user input interface 150, the processor 170 may allow a video signal or an audio signal from an external device, for example, a camera or a camcorder, input through the external device interface 135 to be output through the display 180 or the audio outputter 185.

Meanwhile, the processor 170 may control the display 180 to display an image, for example, may control a broadcast image input through the tuner 131, an external input image input through the external device interface 135, an image input through the network interface, or an image stored in the memory 140 to be displayed on the display 180. In this case, an image displayed on the display 180 may be a still image or a moving image, and may be a 2D image or a 3D image.

Further, the processor 170 may control content stored in the display device 100, received broadcast content, or external input content input from outside to be reproduced, and the content may be various forms such as a broadcast image, an external input image, an audio file, a still image, a connected web screen, and a document file.

The wireless communicator 173 may perform communication with an external device through wired or wireless communication. The wireless communicator 173 may perform short-range communication with an external device. For this, the wireless communicator 173 may support short-range communication using at least one of Bluetooth^{™}, Bluetooth Low Energy (BLE), Radio Frequency Identification (RFID), infrared communication (Infrared Data Association; IrDA), UWB, ZigBee, Near Field Communication (NFC), Wireless-Fidelity (Wi-Fi), Wi-Fi Direct, and Wireless Universal Serial Bus (Wireless USB). The wireless communicator 173 may support wireless communication between the display device 100 and a wireless communication system, between the display device 100 and another display device 100, or between the display device 100 and a network in which the display device 100 or an external server is located, through wireless area networks. The wireless area networks may be wireless personal area networks.

Here, another display device 100 may be a wearable device capable of exchanging data with the display device 100 according to the present disclosure (or capable of interworking), for example, a mobile terminal such as a smart watch, smart glass, head mounted display (HMD), or a smartphone. The wireless communicator 173 may detect (or recognize) a wearable device capable of communication around the display device 100. Further, when the detected wearable device is an authenticated device to communicate with the display device 100 according to the present disclosure, the processor 170 may transmit at least a part of data processed in the display device 100 to the wearable device through the wireless communicator 173. Accordingly, a user of the wearable device may use data processed in the display device 100 through the wearable device.

The voice obtainer 175 may obtain audio. The voice obtainer 175 may include at least one microphone (not shown), and may obtain audio around the display device 100 through the microphone (not shown).

The display 180 may convert a video signal, a data signal, an OSD signal processed in the processor 170 or a video signal, a data signal received from the external device interface 135 into R, G, and B signals to generate a driving signal.

Meanwhile, since the display device 100 illustrated in FIG. 1 is only an embodiment of the present disclosure, some of the illustrated components may be integrated, added, or omitted according to specifications of an actually implemented display device 100.

That is, two or more components may be combined into one component or one component may be divided into two or more components as necessary. Further, functions performed in each block are for describing embodiments of the present disclosure, and specific operations or devices thereof do not limit the scope of the present disclosure.

According to another embodiment of the present disclosure, unlike the configuration illustrated in FIG. 1, the display device 100 may receive and reproduce an image through the network interface 133 or the external device interface 135 without including the tuner 131 and the demodulator 132.

For example, the display device 100 may be implemented by being separated into an image processing device such as a set-top box for receiving a broadcast signal or content according to various network services, and a content reproduction device for reproducing content input from the image processing device.

In this case, the operational method of the display device according to embodiments of the present disclosure described below may be performed by not only the display device 100 as described with reference to FIG. 1 but also any one of an image processing device such as a separated set-top box or a content reproduction device including the display 180 and the audio outputter 185.

The audio outputter 185 outputs, as audio, a signal voice-processed in the processor 170.

The power supply 190 supplies power to the overall display device 100. In particular, power may be supplied to the processor 170 implemented in the form of a system on chip (SOC), the display 180 for image display, and the audio outputter 185 for audio output.

Specifically, the power supply 190 may include a converter for converting AC power into DC power and a dc/dc converter for converting a level of DC power.

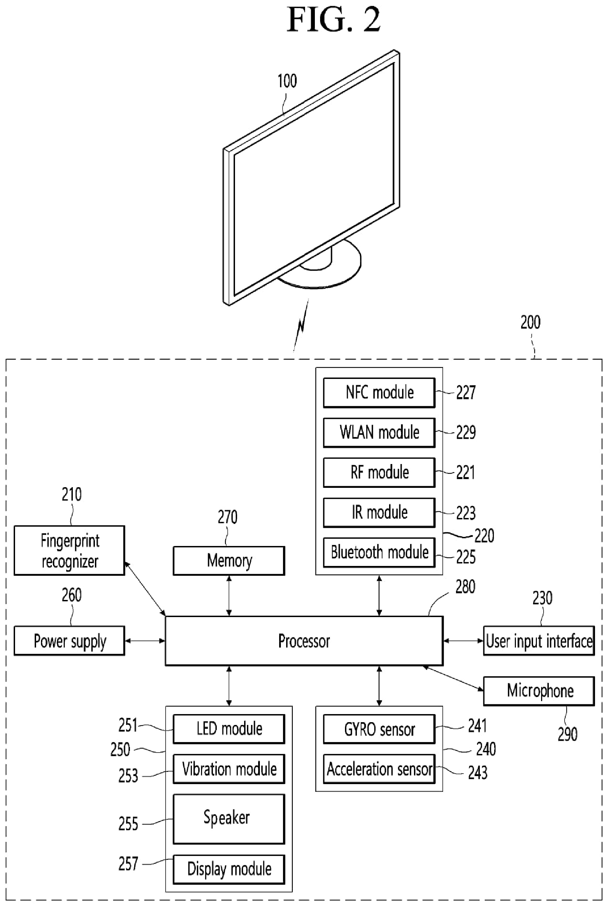

Next, a remote control apparatus according to an embodiment of the present disclosure will be described with reference to FIG. 2 to FIG. 3.

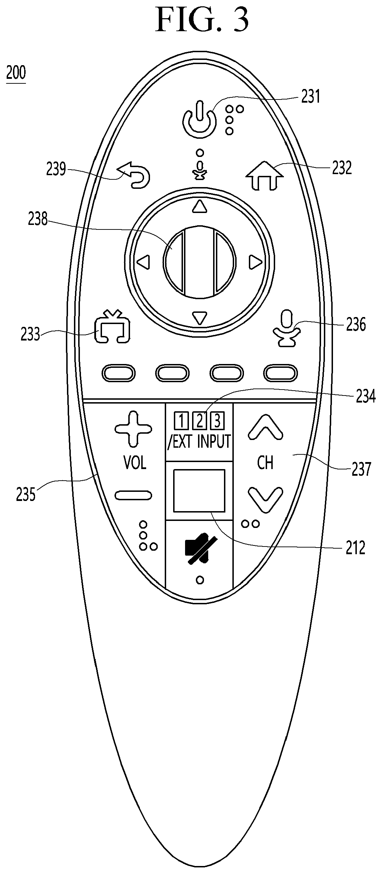

FIG. 2 is a block diagram of a remote control apparatus according to an embodiment of the present disclosure, and FIG. 3 illustrates an example of an actual configuration of a remote control apparatus according to an embodiment of the present disclosure.

First, referring to FIG. 2, the remote control device 200 may include a fingerprint recognizer 210, a wireless communicator 220, a user inputter 230, a sensor 240, an outputter 250, a power supply 260, a memory 270, a processor 280, and a voice obtainer 290.

Referring to FIG. 2, the wireless communicator 220 transmits and receives signals with any one of the display devices according to the embodiments of the present disclosure described above.

The remote control device 200 includes an RF module 221 capable of transmitting and receiving signals with the display device 100 according to an RF communication standard, and may include an IR module 223 capable of transmitting and receiving signals with the display device 100 according to an IR communication standard. Further, the remote control device 200 may include a Bluetooth module 225 capable of transmitting and receiving signals with the display device 100 according to a Bluetooth communication standard. Further, the remote control device 200 includes an NFC module 227 capable of transmitting and receiving signals with the display device 100 according to an NFC communication standard, and may include a WLAN module 229 capable of transmitting and receiving signals with the display device 100 according to a Wireless LAN (WLAN) communication standard.

Further, the remote control device 200 transmits, to the display device 100, a signal containing information on movement, etc. of the remote control device 200 through the wireless communicator 220.

Meanwhile, the remote control device 200 may receive a signal transmitted by the display device 100 through the RF module 221, and may transmit, to the display device 100, a command regarding power on/off, channel change, volume change, or the like through the IR module 223 as necessary.

The user inputter 230 may be configured as a keypad, a button, a touch pad, or a touch screen. A user may input, to the remote control device 200, a command related to the display device 100 by manipulating the user inputter 230. When the user inputter 230 includes a hard-key button, the user may input, to the remote control device 200, a command related to the display device 100 through a push operation of the hard-key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a fingerprint of a user. In an embodiment, the fingerprint recognition button 212 may be capable of a push operation, and thus may receive a push operation and a fingerprint recognition operation. The power button 231 may be a button for turning on/off power of the display device 100. The home button 232 may be a button for moving to a home screen of the display device 100. The live button 233 may be a button for displaying a real-time broadcast program. The external input button 234 may be a button for receiving an external input connected to the display device 100. The volume control button 235 may be a button for controlling a size of volume output by the display device 100. The voice recognition button 236 may be a button for receiving a voice of a user and recognizing the received voice. The channel change button 237 may be a button for receiving a broadcast signal of a specific broadcast channel. The OK button 238 may be a button for selecting a specific function, and the back button 239 may be a button for returning to a previous screen.

FIG. 2 will be described again.

When the user inputter 230 includes a touch screen, the user may input, to the remote control device 200, a command related to the display device 100 by touching a soft key of the touch screen. Further, the user inputter 230 may include various types of input devices operable by a user, such as a scroll key or a jog key, and the present embodiment does not limit the scope of the present disclosure.

The sensor 240 may include a gyro sensor 241 or an acceleration sensor 243, and the gyro sensor 241 may sense information on movement of the remote control device 200.

For example, the gyro sensor 241 may sense information on an operation of the remote control device 200 based on x-, y-, and z-axes, and the acceleration sensor 243 may sense information on a moving speed, etc. of the remote control device 200. Meanwhile, the remote control device 200 may further include a distance measuring sensor, and thus may sense a distance from the display 180 of the display device 100.

The outputter 250 may output a video signal or an audio signal corresponding to an operation of the user inputter 230 or corresponding to a signal transmitted from the display device 100. Through the outputter 250, the user may recognize whether the user inputter 230 is manipulated or whether the display device 100 is controlled.

For example, the outputter 250 may include an LED module 251 which is turned on when the user inputter 230 is manipulated or when signals are transmitted and received with the display device 100 through the wireless communicator 220, a vibration module 253 generating vibration, an audio output module 255 outputting sound, or a display module 257 outputting an image.

Further, the power supply 260 supplies power to the remote control device 200, and when the remote control device 200 does not move for a predetermined time, power waste can be reduced by stopping supply of power. The power supply 260 may resume supply of power when a predetermined key provided in the remote control device 200 is manipulated.

The memory 270 may store various kinds of programs, application data, and the like necessary for control or operation of the remote control device 200. When the remote control device 200 wirelessly transmits and receives signals with the display device 100 through the RF module 221, the remote control device 200 and the display device 100 transmit and receive signals through a predetermined frequency band.

The processor 280 of the remote control device 200 may store and refer to, in the memory 270, information on a frequency band capable of wirelessly transmitting and receiving signals with the display device 100 paired with the remote control device 200.

The processor 280 controls various matters related to control of the remote control device 200. The processor 280 may transmit, to the display device 100 through the wireless communicator 220, a signal corresponding to a manipulation of a predetermined key of the user inputter 230 or a signal corresponding to movement of the remote control device 200 sensed by the sensor 240.

Further, the voice obtainer 290 of the remote control device 200 may obtain a voice.

The voice obtainer 290 may include at least one microphone 291, and may obtain a voice through the microphone 291.

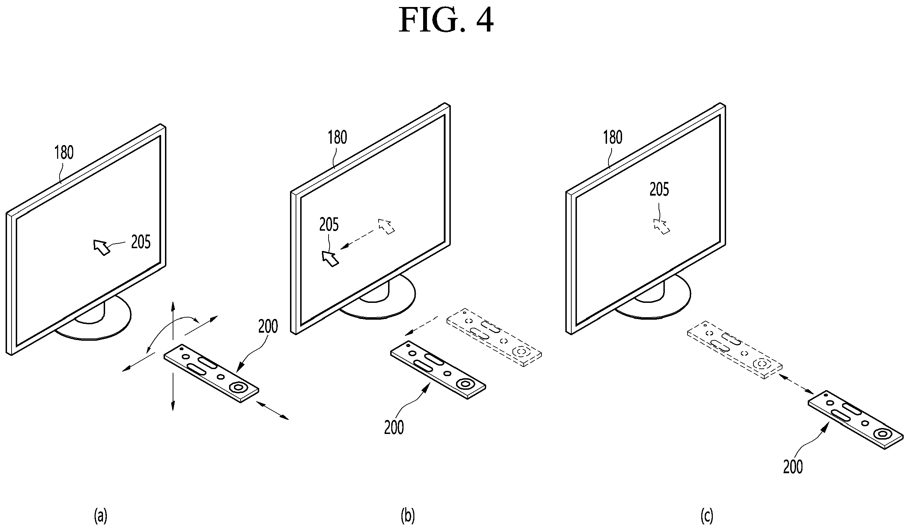

Next, FIG. 4 will be described.

FIG. 4 illustrates an example of using a remote control apparatus according to an embodiment of the present disclosure.

(a) of FIG. 4 illustrates that a pointer 205 corresponding to the remote control device 200 is displayed on the display 180.

A user may move or rotate the remote control device 200 up and down or left and right. The pointer 205 displayed on the display 180 of the display device 100 corresponds to movement of the remote control device 200. Since such a remote control device 200 moves and is displayed according to movement in a 3D space as shown in the drawing, it may be referred to as a spatial remote controller.

(b) of FIG. 4 illustrates that when a user moves the remote control device 200 to the left, the pointer 205 displayed on the display 180 of the display device 100 also moves to the left correspondingly.

Information on movement of the remote control device 200 detected through a sensor of the remote control device 200 is transmitted to the display device 100. The display device 100 may calculate coordinates of the pointer 205 from the information on movement of the remote control device 200. The display device 100 may display the pointer 205 to correspond to the calculated coordinates.

(c) of FIG. 4 illustrates a case where, while a specific button in the remote control device 200 is pressed, a user moves the remote control device 200 away from the display 180. Accordingly, a selected area within the display 180 corresponding to the pointer 205 may be zoomed in and displayed in an enlarged manner.

Conversely, when the user moves the remote control device 200 to be closer to the display 180, a selected area within the display 180 corresponding to the pointer 205 may be zoomed out and displayed in a reduced manner.

Meanwhile, when the remote control device 200 moves away from the display 180, the selected area may be zoomed out, and when the remote control device 200 moves closer to the display 180, the selected area may be zoomed in.

Further, while a specific button in the remote control device 200 is pressed, recognition of up, down, left, and right movement may be excluded. That is, when the remote control device 200 moves away from or approaches the display 180, up, down, left, and right movement is not recognized, and only forward and backward movement may be recognized. When the specific button in the remote control device 200 is not pressed, only the pointer 205 moves according to up, down, left, and right movement of the remote control device 200.

Meanwhile, a moving speed or a moving direction of the pointer 205 may correspond to a moving speed or a moving direction of the remote control device 200.

Meanwhile, in the present specification, the pointer refers to an object displayed on the display 180 corresponding to an operation of the remote control device 200. Accordingly, in addition to the arrow shape illustrated in the drawing as the pointer 205, various shapes of objects are possible. For example, it may be a concept including a point, a cursor, a prompt, a thick outline, and the like. Further, the pointer 205 may be displayed corresponding to any one point among a horizontal axis and a vertical axis on the display 180, and may also be displayed corresponding to a plurality of points such as a line or a surface.

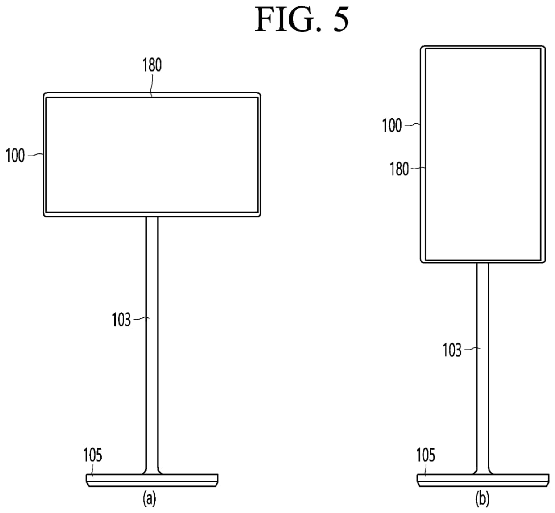

(a) of FIG. 5 and (b) of FIG. 5 are views for describing a landscape mode and a portrait mode of a stand-type display device according to an embodiment of the present disclosure.

Referring to (a) of FIG. 5 and (b) of FIG. 5, a stand-type display device 100 is illustrated.

A shaft 103 and a stand base 105 may be connected to the display device 100.

The shaft 103 may connect the display device 100 and the stand base 105. The shaft 103 may extend vertically.

A lower end of the shaft 103 may be connected to an edge portion of the stand base 105.

The lower end of the shaft 103 may be rotatably connected to a peripheral portion of the stand base 105.

The display device 100 and the shaft 103 may rotate about a vertical axis with respect to the stand base 105.

An upper portion of the shaft 103 may be connected to a rear surface of the display device 100.

The stand base 105 may serve to support the display device 100.

The display device 100 may be configured to include the shaft 103 and the stand base 105.

The display device 100 may rotate about a point where an upper portion of the shaft 103 and a rear surface of the display 180 are in contact.

(a) of FIG. 5 illustrates operation in a landscape mode in which a horizontal length of the display 180 is greater than a vertical length, and (b) of FIG. 5 illustrates operation in a portrait mode in which a vertical length of the display 180 is greater than a horizontal length.

A user may move the stand-type display device 100. That is, unlike a fixed device, mobility of the stand-type display device 100 is improved, and the user is not restricted by a placement position.

Hereinafter, a system, an apparatus, and a method in which a sink device is connected with only one source device among a plurality of source devices belonging to the same network without adding a separate hardware device such as a server such as a Discovery Broker, and excludes connection of the remaining source device(s), will be described.

Meanwhile, conventionally, for connection with a sink device, a source device could not operate by itself, and user intervention of the source device was essential for limited discovery such as connection with a desired sink device, and a specific application had to be executed in advance before mutual connection or NFC or QR code tagging was required.

Nevertheless, in the conventional method, in a public environment, unnecessary devices are discovered during a connection process between a source device and a sink device, so that there is difficulty or inconvenience in connection with a desired device.

Further, in the conventional method, since information of a source device has to be transmitted to the outside, for example, to a server, there are problems in that traffic increases and security concerns occur.

Accordingly, according to at least one of various embodiments of the present disclosure, even without adding a separate hardware device such as a server, a desired source device and a sink device can be connected to each other, and since a separate server is not passed through, a network load due to traffic can be reduced, and security issues such as personal information can be minimized, and further, since a separate authentication procedure by a user is not required, connection with a sink device can be easily performed, thereby improving convenience of use.

Further, the present disclosure can be applied to a digital system including IoT and a sensor network.

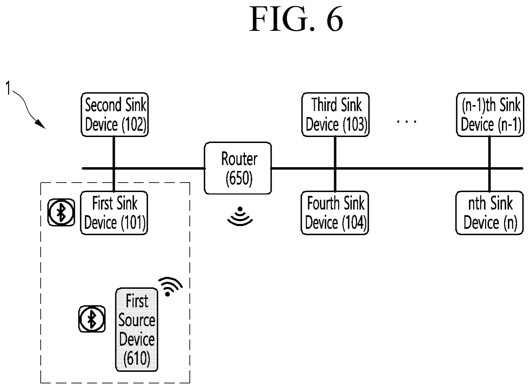

FIG. 6 is a view illustrated to describe a display system 1 according to an embodiment of the present disclosure.

A display system 1 according to at least one of various embodiments of the present disclosure may include at least one source device 610 and two or more sink devices 101 to 10n (where n is a natural number). In this case, the display system 1 may further include a router 650 so that communication between the plurality of sink devices is smoothly performed. The router 650 may be a wired or wireless router.

The display system 1 according to the present disclosure may be, for example, a system provided in a specific space such as a hotel. However, the present disclosure is not limited thereto.

All sink devices 101 to 10n constituting the display system 1 are exemplified as belonging to the same network.

Likewise, all source devices may also belong to the same network as the sink devices 101 to 10n. In FIG. 6, for convenience of description, only one source device, that is, a first source device 610, is illustrated.

In this case, at least one of the sink devices 101 to 10n and at least one source device 610 may search for neighboring devices connectable to the same network through any one of SSID, mDNS, and the like.

In the present specification, each sink device 101 to 10n is exemplified as the display device 100, but is not necessarily limited thereto. For example, some of the sink devices may be any one of a signage, a PC, a notebook, a tablet PC, and a wearable device.

One source device and one sink device may communicate according to a first communication protocol before an event occurs, and may communicate according to a second communication protocol after the event occurs.

Here, the first communication protocol may include a wired or wireless communication protocol. For example, when the first communication protocol is a wireless communication protocol, it may include Wi-Fi.

The second communication protocol may also include a wired or wireless communication protocol. For example, when the second communication protocol is a wireless communication protocol, it may include BLE.

The sink device 100 may search for neighboring source device(s) belonging to the same network.

The sink device 100 may receive first information from a first source device 610 among the searched source devices.

The sink device 100 may identify the first source device 610 that has transmitted the first information.

Here, the first information may be, for example, execution information of a specific application in the first source device 610. In the above, the specific application may include a predefined application such as AirPlay or Miracast, but is not limited thereto. Accordingly, the specific application may be arbitrarily changed such as addition or deletion.

According to an embodiment, the first information may be, for example, NFC or QR code tagging information.

The sink device 100 may receive second information from the first source device 610 that has transmitted the first information.

When the second information is received from the first source device 610, the sink device 100 may register the first source device 610 in a whitelist.

In the above, the second information may include, for example, information on a sink device selected from a sink device list included in a user interface provided to the first source device 610. That is, the second information may represent, for example, selection information of a first sink device 101 from the provided sink device list.

Hereinafter, an operation of each device in the display system 1 according to the present disclosure will be described in more detail.

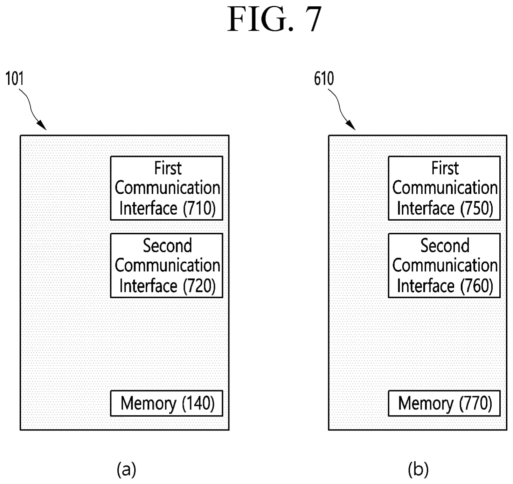

FIG. 7 is a view illustrated to describe a configuration for a connection operation between a source device 610 and a sink device 101 according to embodiments of the present disclosure.

In FIG. 7, only configurations necessary for connection between devices are briefly illustrated in relation to the present disclosure.

(a) of FIG. 7 illustrates the sink device 101. The sink device 101 may include a first communication interface 710, a second communication interface 720, a memory 140, and the like.

Meanwhile, (b) of FIG. 7 illustrates the source device 610. The source device 610 may include a first communication interface 750, a second communication interface 760, a memory 770, and the like.

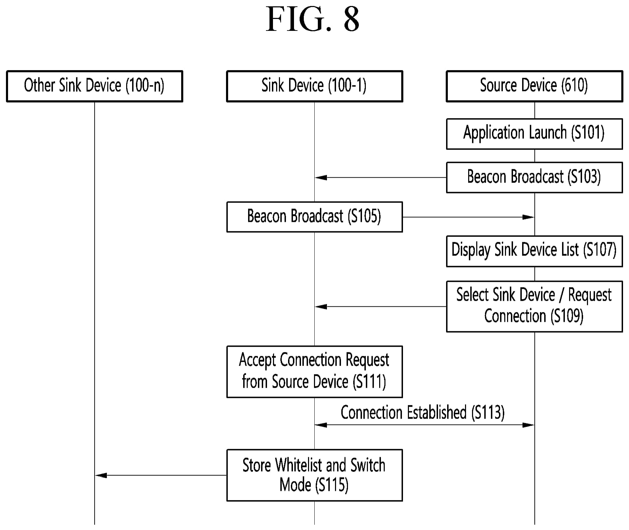

FIG. 8 describes a connection operation between the sink device 100 and the source device 610 according to an embodiment of the present disclosure.

The present disclosure relates to discovery of identical devices on a network, but has a purpose of restricted connection.

According to the present disclosure, devices can be restrictively discovered, and as a method therefor, for example, connection information may be provided to a user by using short-range communication means.

Further, according to the present disclosure, the sink device 100 may configure a whitelist in response to a connection request of the source device 610.

Meanwhile, a whitelist configured in one sink device 101 may operate as a blacklist in another sink device.

Accordingly, according to the present disclosure, only one sink device 101 and one source device 610 are connected, and connection with other devices may be automatically restricted.

Meanwhile, the present disclosure may be applied not only to connection between a display device and a mobile terminal but also to connection between various devices, and in the process, even when discovery is performed based on a network discovery protocol (for example, Simple Service Discovery Protocol (SSDP), Multicast Domain Name Service (mDNS), etc.), an accurate connection list may be provided to a user by using additional information.

Referring to FIG. 7 and FIG. 8, an operational method of the display device includes searching for neighboring source devices, identifying the first source device 610 when first information is obtained from the first source device 610 among the searched source devices, and registering the first source device 610 in a first list when second information is received from the first source device 610.

As described above, the sink devices 101 to 10n and at least one source device 610 may be connected to the same network.

Meanwhile, the sink device 101 may be connected through the first interface 710, and the source device 610 may be connected through the first interface 750.

The first interface 710 and the first interface 750 may both be in a listen mode ON state.

The first interface 710 and the first interface 750 may recognize each other using SSDP or mDNS protocol. In this case, a list of recognized devices may be stored in, for example, the memory 140 and the memory 770. In this case, a source device list and a sink device list may be stored in the memory 140. Further, a sink device list may be stored in the memory 770.

A user may execute (launch) an App (for example, AirPlay, Youtube DIAL (Discovery & Launch), etc.) to be transmitted from the source device 610 to the sink device 101 (S101).

In this case, the second communication interface 760 of the source device 610 may broadcast a BLE beacon (S103). In the above, the BLE beacon may include, for example, a device name, a device MAC address, etc., but is not limited thereto.

The second communication interface 720 of the sink device 101 may receive a beacon signal transmitted from the second communication interface 760 of the source device 610, and may recognize that the source device 610 exists in a short distance based on the beacon signal.

In this case, the second communication interface 720 of the sink device 101 may also broadcast a beacon signal (S105). In the above, the beacon signal may include, for example, a device name, a device MAC address, etc., but is not limited thereto.

The source device 610 may receive the beacon signal of the sink device 101 through the second communication interface 760. Accordingly, the source device 610 may recognize that the sink device 101 exists in a short distance. When the sink device 101 that has transmitted the beacon is included in a sink device list stored in the memory 770, the source device 610 may display the sink device 101 in a sink device list to be cast or mirrored in the App (S107).

In the App of the source device 610, the source device 610 may select the sink device 101 to be cast or mirrored and request connection (S109).

The sink device 101 may accept a request of the source device 610 based on a source device list stored in the memory 140 and information on receiving a beacon broadcast from the second communication interface 760 (S111). Through this, the source device 610 and the sink device 101 may be connected to each other (S113).

The sink device 101 may switch to a whitelist mode after connection. The sink device 101 may switch a listen mode to OFF. Accordingly, the sink device 101 may not be discovered on the network.

Whitelist information (for example, connected source device information - MAC address, IP, device name, etc.) may be stored in the memory 140.

The sink device 101 may transmit the whitelist information to a sink device list stored in the memory 140 to request other sink devices 102 to 10n in a blacklist mode, that is, sink devices in a blacklist mode state, not to accept a request of the source device 610. In this case, the blacklist mode state may represent, for example, a state in which the listen mode is still ON because the source device 610 is not yet connected.

That is, in FIG. 6, other sink devices 102 to 10n are all in a blacklist mode state, and manage whitelist information A0 transmitted from 101 as a blacklist to reject a request from a possible mobile A0.

Thereafter, when other sink devices 102 to 10n in a blacklist mode state are connected to the source device 610 and switch to a whitelist mode, the mobile information of the whitelist may also be shared with other sink devices 102 to 10n of a local network and managed as a blacklist.

That is, when mobile B0 is connected to the sink device 101, the blacklist may include existing A0 and B0 and may be shared with other sink devices 102 to 10n in a blacklist mode of the local network.

When additional mobile A1 connection is required to the sink device 101 in the whitelist mode, release of the whitelist mode is selected in a corresponding App menu of TV 10.

In this case, the whitelist mode of the sink device 101 is temporarily released and a listen mode of 101 may also be switched to ON. Thereafter, A1 is connected to the sink device 101 by repeating the above process. At that time, the sink device 101 is switched back to the whitelist mode, and the corresponding list A0 and A1 may be transmitted to other sink devices 102 to 10n in a list stored in 101.

Further, when a plurality of sink devices exist in the same room, such as a suite room, and have a policy of allowing the same mobile connection, when one sink device is switched to a whitelist mode, other sink devices may also be switched to the whitelist mode with the same list.

That is, when the first sink device 101 and the second sink device 102 are located in the same room, the two sink devices are managed as the same display group, and as described above, when the source device 610 is stored in the sink device 101, the first sink device 101 and the second sink device 102 may be switched to the whitelist mode to allow only the source device 610 of the same whitelist list.

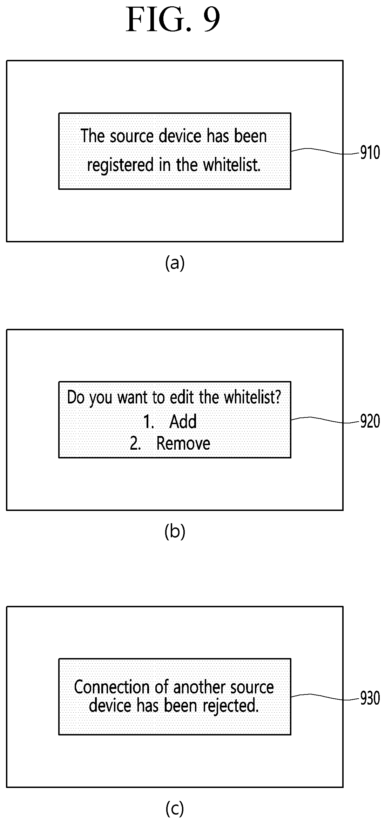

FIG. 9 is a view illustrating an example of a user interface provided by the sink device 100 according to an embodiment of the present disclosure.

The sink device 101 may provide a user interface such as (a) to (c) of FIG. 9 according to a connection state with the source device 610.

In (a) of FIG. 9, a message "The source device has been registered in a whitelist." may be provided on a screen of the sink device 101.

In (b) of FIG. 9, a message "Do you want to edit the whitelist? 1. Add, 2. Remove, etc." may be provided on a screen of the sink device 101.

In (c) of FIG. 9, a message "Connection of another source device has been rejected." may also be provided on a screen of the sink device 101.

Even if not specifically mentioned, in the present disclosure, a sequence of at least some operations disclosed herein may be performed simultaneously, performed in an order different from the above-described order, or partially omitted/added.

According to an embodiment of the present disclosure, the above-described method may be implemented as code readable by a processor in a medium in which a program is recorded. Examples of a processor-readable medium include a ROM, a RAM, a CD-ROM, a magnetic tape, a floppy disk, and an optical data storage device.

The display device described above is not limitedly applied to the configurations and methods of the above-described embodiments, and the embodiments may be configured such that all or part of each embodiment is selectively combined so that various modifications can be made.

### Industrial Applicability

The present disclosure relates to a connection operation between a source device and a sink device, and can be applied to various digital industry fields, and thus has industrial applicability.

## Claims

1. A display device, comprising:
a memory; and
a processor configured to search for neighboring source devices, to store a sink device list and a source device list, when a first signal is received from a first source device among the searched source devices, to transmit a second signal to a network, and to register the first source device in a first list when a third signal is received from the first source device and the first source device is included in the stored source device list.

2. The display device of claim 1, wherein the processor is configured to register, in a second list, source devices other than the first source device among the searched source devices.

3. The display device of claim 2, wherein the processor is configured to search for the neighboring source devices by turning on a listen-on mode.

4. The display device of claim 3, wherein the processor is configured to control the listen-on mode to be turned off when the first source device is registered in the first list.

5. The display device of claim 1, wherein the neighboring source devices are devices belonging to the same network.

6. The display device of claim 5, wherein the neighboring source devices are searched for through SSDI or mDNS.

7. The display device of claim 6, wherein the neighboring source devices are searched for through BLE.

8. The display device of claim 1, wherein the first signal includes device name information and MAC address information of the first source device.

9. The display device of claim 1, wherein the first source device transmits the first signal after executing an application.

10. The display device of claim 1, wherein the third signal includes information for selecting the display device as a sink device.

11. The display device of claim 1, further comprising:
a display configured to output a user interface including the first list in which the first source device is registered.

12. The display device of claim 11, wherein the processor is configured to control the display to provide a function item for editing the first list when a first list edit item included in the user interface output on the display is selected.

13. The display device of claim 12, wherein the processor is configured to allow addition of a new source device through the function item for editing the first list only when approval of the first source device is obtained or when the first source device previously registered in the first list is searched.

14. An operational method of a display device, comprising:
searching for neighboring source devices;
storing a sink device list and a source device list;
receiving a first signal from a first source device among the searched source devices;
transmitting a second signal to a network;
receiving a third signal from the first source device; and
registering the first source device in a list when the first source device is included in the stored source device list.

15. A display system, comprising:
a plurality of source devices; and
a sink device including a processor configured to search for neighboring source devices, store a sink device list and a source device list, transmit a second signal to a network when a first signal is received from a first source device among the searched source devices, and register the first source device in a first list when a third signal is received from the first source device and the first source device is included in the stored source device list.
